# EUROPÄISCHE PATENTSCHRIFT

(11) **EP 1 078 872 B1**
(45) Veröffentlichungstag und Bekanntmachung des Hinweises auf die Patenterteilung: **19.11.2003**
(21) Anmeldenummer: 00113539.1
(22) Anmeldetag: 27.06.2000
(51) Int. Cl.: B65H 27/00, F16L 9/00, D06B 23/02, F16C 13/00, B29D 31/00, B23H 9/04

(54) **Verfahren zur Herstellung eines dünnwandigen Rohrs und dafür geeignete Vorrichtung**
Method of fabricating a thin-wall pipe and an apparatus suitable for carrying out such a method
Procédé de fabrication d'un tuyau à paroi mince et un appareil permettant de mettre en oeuvre ce procédé

(30) Priorität: 27.08.1999 DE 19940607
(43) Veröffentlichungstag der Anmeldung: 28.02.2001
(73) Patentinhaber: Eduard Küsters Maschinenfabrik GmbH & Co. KG, 47805 Krefeld (DE)
(72) Erfinder: Ahrweiler, Karl-Heinz, 47877 Willich (DE)
(74) Vertreter: Kluin, Jörg-Eden, Dr. Dipl.-Phys.

(56) Entgegenhaltungen:
- EP-A- 0 401 886
- EP-A- 0 451 890
- GB-A- 2 073 850
- US-A- 2 720 735
- US-A- 5 287 621
- US-A- 5 666 725

## Beschreibung

Die Erfindung bezieht sich auf ein Verfahren der dem Oberbegriff des Anspruchs 1 entsprechenden Art.

Unter einem "dünnwandigen Rohr" sei ein solches mit so geringer Wandstärke verstanden, daß die Formsteifigkeit des Rohrs nicht ausreicht, um die beim Spannen für einen Dreh- oder Schleifvorgang und die durch diese Bearbeitungen selbst auftretenden Kräfte ohne wesentliche Verformung ertragen zu können. Es ist bekannt, derartige dünnwandige Rohre aus Blech durch spiraliges Zusammenbördeln oder Zusammenschweißen von entsprechendem Bandmaterial herzustellen, wie es z.B. bei den sogenannten "Klimarohren" oder auch bei den spiralgeschweißten Erdöl- oder Gasleitungsrohren der Fall ist. Bei diesen Rohren kommt es aber nur auf die Schaffung eines geschlossenen Kanals an, nicht auf die Präzision und Oberflächenqualität.

Diese Eigenschaften sind jedoch bei Walzenrohren gefragt, die für durchbiegungssteuerbare Walzen verwendet werden. Derartige Walzen umfassen ein das Walzenrohr der Länge nach durchgreifendes undrehbares Querhaupt, an welchem auf der Seite des Walzspalts radial gegen den Innenumfang des Walzenrohrs wirkende Stützeinrichtungen, z.B. in einer Reihe längs des Walzspalts angeordnete einzelne Stützelemente vorgesehen sind. Diese Stützelemente können unabhängig voneinander hydraulisch angesteuert werden und üben Kräfte gegen den Innenumfang des Walzenrohrs aus, die einen vorbestimmbaren Verlauf des zwischen der Walze und einer Gegenwalze ausgeübten Liniendruck ergeben. Beispiele solcher Walzen sind in der EP 720 698 B1, der WO 92/13787 und den DE-PSen 25 22 657 und 31 26 492 dargestellt.

In den Beispielen bestehen die Walzenrohre aus Kunststoff, gegebenenfalls mit Verstärkungseinlagen. In manchen Anwendungsfällen kann es aus Gründen der mechanischen Eigenschaften des Walzenrohrs und seiner Oberflächenbeschaffenheit vorteilhaft sein, statt des Kunststoffrohrs ein sehr dünnwandiges Metallrohr vorzusehen, welches die Kräfteverteilung der einzelnen Stützelemente in eine entsprechende Liniendruckverteilung im Walzspalt möglichst unverfälscht weitergibt.

Die vorerwähnten, aus Blechzuschnitten gebördelten oder geschweißten Rohre kommen für diesen Zweck nicht in Betracht, weil es ihnen an Präzision mangelt und die Fügestellen als Inhomogenitäten der Oberfläche in Erscheinung treten.

Der Erfindung liegt die Aufgabe zugrunde, dünnwandige Rohre mit relativ großem Durchmesser, ausreichender Präzision und homogener Oberfläche herstellen zu können.

Diese Aufgabe wird durch die in Anspruch 1 wiedergegebene Verfahrensweise gelöst.

Das Rohr wird nicht aus kleineren Zuschnitten oder Bandmaterial zusammengefugt, sondern im Ganzen "aus den Vollen" gearbeitet.

Die Außenumfangsfläche, die bei einem Walzenrohr später den arbeitenden Außenumfang der Walze bildet, wird an einem relativ dickwandigen Ausgangsrohr endbearbeitet. Das Ausgangsrohr ist so stabil, daß es für diese Endbearbeitung eingespannt werden kann und sich auch unter den Kräften dieser Bearbeitung nicht wesentlich verformt. Es läßt sich also an diesem Ausgangsrohr auf die übliche Weise die Außenumfangsfläche herstellen.

Der Bearbeitungsschritt, der zu der geringen Wandstärke führt, erfolgt von innen. Das Ausgangsrohr wird in ein äußeres Stützrohr eingeschoben und liegt mit dem fertigen Außenumfang mit einem geringstmöglichen, d.h. gerade das Einschieben gestattenden Spiel am Innenumfang des Stützrohrs an, welches seinerseits so formsteif ist, daß es das Ausgangsrohr zylindrisch halten und gegen die Kräfte der Bearbeitung abstützen kann. Das Ausgangsrohr muß also die nötige Stabilität nicht selbst aufbringen, sondern es wird diese von dem Stützrohr geliefert.

Damit eine einwandfreie Halterung des Ausgangsrohrs gegeben ist, wird es durch ein fluides Druckmedium, z. B. eine hydraulische Druckflüssigkeit, aufgeblasen. Es legt sich dabei mit seinem Außenumfang fest gegen den Innenumfang des Stützrohrs an und wird bei einer Drehung des Stützrohrs unter Reibungsschluß mitgenommen, wobei die Reibungskräfte so groß sind, daß sie das bei der Bearbeitung auftretende Drehmoment aufbringen können.

Damit das fluide Druckmedium nicht in den Spalt zwischen dem Außenumfang des Ausgangsrohrs und dem Innenumfang des Stützrohrs eindringen und den Reibungsschluß aufheben kann, sind in der Nähe der Enden des Stützrohrs Umfangsdichtungen vorgesehen, die dies verhindern.

Die Bearbeitung des Innenumfangs des Ausgangsrohrs kann auf verschiedene Weisen erfolgen, wobei generell eine Drehung des Werkzeugs und des Innenumfangs des Stützrohrs gegeneinander gegeben sind (Anspruch 2).

Gemäß Anspruch 3 kann an dem stangenartigen Werkzeugträger ein Werkzeug wie eine Schleifeinheit oder ein Bohrstahl fest angebracht sein, welche bei einer Drehung des Werkzeugträgers und des Stützrohrs gegeneinander die Endbearbeitung vornehmen.

Es ist aber auch denkbar, ein Werkzeug vorzusehen, welches sich um den stillstehenden Werkzeugträger bei ebenfalls stillstehendem Stützrohr dreht und dabei den Innenumfang des Ausgangsrohrs bearbeitet, wobei ein Längsvorschub vorzusehen ist.

Die Erfindung verkörpert sich gemäß Anspruch 4 auch in einer Vorrichtung, die die Herstellung eines dünnwandigen Rohrs erlaubt und bei der Mittel zur gegenseitigen Drehung des Werkzeugs und des Stützrohrs und zur gegenseitigen Verschiebung derselben in Achsrichtung vorgesehen sind (Anspruch 5).

Insbesondere kann das Werkzeug an dem stangenförmigen Werkzeugträger fest angebracht und der Werkzeugträger gegenüber dem Stützrohr drehangetrieben sein.

In einem einfachen Ausführungsbeispiel kann der stangenartige Werkzeugträger als Bohrstange mit einem Bohrstahl ausgebildet sein (Anspruch 7).

Um das fluide Druckmedium in das Innere des Stützrohrs einführen zu können, empfiehlt sich die Anbringung einer Zuleitung durch den stangenartigen Werkzeugträger hindurch gemäß Anspruch 8.

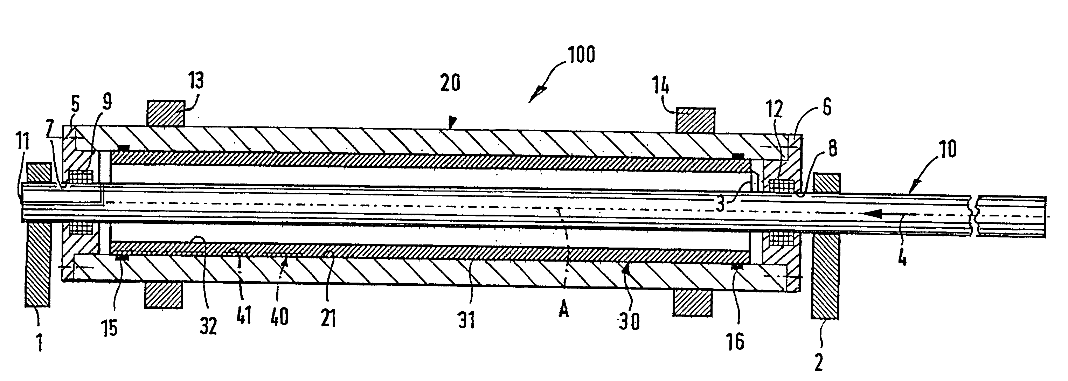

In der Zeichnung ist ein Ausführungsbeispiel der Erfindung schematisch dargestellt. Sie zeigt einen Längsschnitt durch eine beispielhafte Ausführungsform der zur Durchführung des erfindungsgemäßen Verfahrens geeigneten Vorrichtung.

Die in der Zeichnung als Ganzes mit 100 bezeichnete Vorrichtung umfaßt einen stangenartigen Werkzeugträger 10 von einer gegen die Bearbeitungskräfte auch bei einer gewissen Stützweite ausreichenden Biegesteifigkeit. Die Stützweite ist zwischen zwei in Achsrichtung des Werkzeugträgers 10 Abstand aufweisende Halterungen 1,2 des Werkzeugträgers 10 gegeben.

Das Werkzeug ist in dem gezeichneten Ausführungsbeispiel durch einen Bohrstahl 3 gebildet, der an dem Werkzeugträger 10 angebracht ist und mit diesem in Richtung des Pfeiles 4 durch die Halterungen 1,2 hindurchschiebbar ist.

Der Werkzeugträger 3 kann in den Halterungen 1,2 drehbar, aber auch drehfest sein. Zwischen den Halterungen 1,2 ist ein biegesteifes Stützrohr 20 mit Endflanschen 5,6 vorgesehen, die in einer zentralen Bohrung 7,8 von dem stangenartigen Werkzeugträger 10 durchgriffen sind. Die Bohrungen 7,8 sind gegenüber dem stangenartigen Werkzeugträger 10 durch Dichtungen 9,12 abgedichtet, so daß sich das Stützrohr 20 gegenüber dem stangenartigen Werkzeugträger 10 einerseits drehen kann und der Werkzeugträger 10 in Achsrichtung durch das Stützrohr hindurchschiebbar ist und andererseits im Innern des Stützrohrs ein geschlossener Druckraum gebildet ist, der über eine von dem aus dem Endflansch 5 hervorstehenden Ende des stangenartigen Werkzeugträgers 10 her in das Innere des Stützrohrs 20 geführten Zuleitung 11 mit einem fluiden Druckmittel z.B. einer hydraulischen Druckflüssigkeit füllbar ist.

Das Stützrohr 20 ist über in der Nähe seiner Enden angreifende Lünetten 13,14 bei seiner Drehung abgestützt. Das Ausgangsrohr für das herzustellende dünnwandige Rohr ist in der Zeichnung mit 30 bezeichnet. Das Ausgangsrohr ist zu Anfang dickwandig und in der üblichen Weise am Außenumfang 31 zylindrisch gedreht und geschliffen worden. Die Durchmesser des Außenumfangs 31 und des Innenumfangs 21 des Stützrohrs 20 sind so aufeinander abgestimmt, daß sich das Ausgangsrohr 30 gerade noch der Länge nach in das Stützrohr 20 einschieben läßt.

In der dargestellten Phase hat das Ausgangsrohr 30 seine geringe Endwandstärke noch nicht erreicht. Diese wird bei der Endbearbeitung mittels des Werkzeuges 3, in dem gezeichneten Ausführungsbeispiel mittels eines Bohrstahls, hergestellt. Dabei wird die Wandstärke des Ausgangsrohrs 30 immer geringer, bis das angestrebte dünnwandige Rohr 40 fertiggestellt ist. Dennoch behält das Ausgangsrohr 30 in allen Phasen seine geometrische Gestalt, weil es durch das Stützrohr 20 außen abgestützt ist.

Die Abstützung wird durch den Druck der in das Innere des Stützrohrs 20 durch die Zuleitung 11 eingebrachten Druckmediums unterstützt, welches das Ausgangsrohr 30 radial etwas aufweitet und unter Reibungsschluß an dem Innenumfang 21 des Stützrohrs 20 anlegt. Damit das Druckmedium nicht in den Zwischenraum zwischen den Umfangsflächen 21 und 31 eindringen und den Reibungsschluß aufheben oder verschlechtern kann, sind im Bereich der Enden des Ausgangsrohrs 30 Umfangsdichtungen 15,16 vorgesehen. Das Ausgangsrohr 30 kann auf diese Weise auf eine sehr geringe Wandstärke gebracht werden ohne daß es sich durch Spann- oder Bearbeitungskräfte verformt. Die Außenumfangsfläche 31 des Ausgangsrohrs 30 und die in der Zeichnung an einer Stelle links unten strichpunktiert nur angedeutete Innenumfangsfläche 41 des fertigen Rohrs 40 sind außerdem strikt konzentrisch, was für die Verwendung des Rohrs 40 als Walzenrohr in einer durchbiegungssteuerbaren Walze und für deren Schwingungsarmut ausschlaggebend ist. Irgendwelche Fügestellen hat das Rohr 40 nicht.

## Patentansprüche

1. Verfahren zur Herstellung eines dünnwandigen kreiszylindrischen Rohrs (40) mit einem Durchmesser von mehr als etwa 20 cm, **dadurch gekennzeichnet, daß** ein dickwandiges Ausgangsrohr (30) am Außenumfang (31 ) endbearbeitet und mit dem endbearbeiteten Außenumfang (31 ) der Länge nach in ein äußeres Stützrohr (20) eingeschoben wird, dessen Innenumfang (21) nur geringes Spiel gegenüber dem Außenumfang (31 ) des Ausgangsrohrs (30) aufweist, daß das Ausgangsrohr (30) durch einen Innendruck eines fluiden Druckmediums mit seinem Außenumfang (31 ) unter Reibungsschluß gegen den Innenumfang (21) des Stützrohrs (20) angelegt wird und daß mittels einer das Ausgangsrohr (30) der Länge durchgreifenden stangenförmigen Werkzeugträgers (10) und eines entsprechenden Werkzeuges (3) das Ausgangsrohr (30) am Innenumfang (32) zu dem fertigen Rohr (40) endbearbeitet wird.

2. Verfahren nach Anspruch 1, **dadurch gekennzeichnet, daß** das Werkzeug (3) und das Stützrohr (20) bei der Endbearbeitung des Innenumfangs (32) des Ausgangsrohrs (30) gegeneinander um die gemeinsame Längsachse (A) gedreht werden.

3. Verfahren nach Anspruch 2, **dadurch gekennzeichnet, daß** das Werkzeug (3) an dem stangenförmigen Werkzeugträger (10) fest angebracht und der Werkzeugträger (10) gegenüber dem Stützrohr (20) gedreht werden.

4. Vorrichtung zur Durchführung des Verfahrens nach einem der Ansprüche 1 bis 3, **dadurch gekennzeichnet, daß** sie ein mit Endflanschen (5,6) versehenes formsteifes Stützrohr (20) umfaßt, welches der Länge nach von einem die Endflanschen (5,6) abgedichtet durchgreifenden stangenartigen Werkzeugträger durchgriffen ist, an welchem ein Werkzeug (2) zur Endbearbeitung des Innenumfangs (32) des Ausgangsrohrs (30) angeordnet ist, daß in dem Stützrohr (20) axial innerhalb der Endflanschen (5,6) jeweils eine Umfangsdichtung (15,16) angeordnet ist und daß eine Zuleitung (11) vorgesehen ist, durch die dem Innern des Stützrohrs (20) ein fluides Druckmedium zuleitbar ist.

5. Vorrichtung nach Anspruch 4, **dadurch gekennzeichnet, daß** Mittel zur gegenseitigen Drehung des Werkzeugs (3) und des Stützrohrs (20) und/oder zur gegenseitigen Verschiebung derselben in Achsrichtung vorgesehen sind.

6. Vorrichtung nach Anspruch 5, **dadurch gekennzeichnet, daß** das Werkzeug (3) an dem stangenförmigen Werkzeugträger (10) fest angebracht ist und der Werkzeugträger (10) gegenüber dem Stützrohr (20) drehangetrieben ist.

7. Vorrichtung nach Anspruch 6, **dadurch gekennzeichnet, daß** der stangenartige Werkzeugträger (10) als Bohrstange mit einem Bohrstahl (3) ausgebildet ist.

8. Vorrichtung nach einem der Ansprüche 4 bis 7, **dadurch gekennzeichnet, daß** die Zuleitung (11 ) für das fluide Druckmedium von dem aus dem Endflansch (5) hervorstehenden Ende des stangenartigen Werkzeugträgers (10) durch dessen Inneres in das Innere der Stützwalze (20) führt.

## Claims

1. Method of producing a thin-walled circular-cylindrical tube (40) having a diameter of more than about 20 cm, **characterized in that** a thick-walled initial tube (30) is finish-machined on the outer circumference (31) and is pushed lengthways with the finish-machined outer circumference (31) into an outer supporting tube (20), the inner circumference (21) of which has only slight play relative to the outer circumference (31) of the initial tube (30), **in that** the initial tube (30), with its outer circumference (31), is brought to bear with a friction grip against the inner circumference (21) of the supporting tube (20) by an internal pressure of a fluid pressure medium, and **in that**, by means of a bar-like tool carrier (10), passing through the initial tube (30) of the length [sic], and of a corresponding tool (3), the initial tube (30) is finish-machined on the inner circumference (32) to form the finished tube (40) .

2. Method according to Claim 1, **characterized in that** the tool (3) and the supporting tube (20) are rotated relative to one another about the common longitudinal axis (A) during the finish machining of the inner circumference (32) of the initial tube (30) .

3. Method according to Claim 2, **characterized in that** the tool (3) is firmly attached to the bar-like tool carrier (10), and the tool carrier (10) is rotated relative to the supporting tube (20).

4. Device for carrying out the method according to one of Claims 1 to 3, **characterized in that** it comprises a dimensionally stable supporting tube (20) which is provided with end flanges (5, 6) and through which a bar-like tool carrier passes lengthways, which tool carrier passes through the end flanges (5, 6) in a sealed-off manner and on which a tool (2) [sic] for the finish machining of the inner circumference (32) of the initial tube (30) is arranged, **in that** in each case a circumferential seal (15, 16) is arranged in the supporting tube (20) axially within the end flanges (5, 6) , and **in that** a feed line (11) through which a fluid pressure medium can be fed to the interior of the supporting tube (20) is provided.

5. Device according to Claim 4, **characterized in that** means are provided for the mutual rotation of the tool (3) and the supporting tube (20) and/or for the mutual displacement of the same in the axial direction.

6. Device according to Claim 5, **characterized in that** the tool (3) is firmly attached to the bar-like tool carrier (10), and the tool carrier (10) is rotationally driven relative to the supporting tube (20).

7. Device according to Claim 6, **characterized in that** the bar-like tool carrier (10) is designed as a boring bar having a boring cutter (3).

8. Device according to one of Claims 4 to 7, **characterized in that** the feed line (11) for the fluid pressure medium leads through the interior of the bar-like tool carrier (10) into the interior of the supporting roll (20) from that end of the said bar-like tool carrier (10) which projects from the end flange (5).

## Revendications

1. Procédé pour la fabrication d'un tuyau (40) à paroi mince cylindrique circulaire avec un diamètre de plus de 20 cm environ, **caractérisé en ce qu'**un tuyau d'origine (30) à paroi épaisse est soumis au finissage sur son pourtour extérieur (31) et est poussé avec le pourtour extérieur (31) fini sur toute la longueur à l'intérieur d'un tuyau de support (20) extérieur dont le pourtour intérieur (21) ne présente qu'un faible jeu par rapport au pourtour extérieur (31) du tuyau d'origine (30), **en ce que** le tuyau d'origine (30) est appuyé avec son pourtour extérieur (31) contre le pourtour intérieur (21) du tuyau de support (20) par fermeture à friction moyennant une pression interne d'un agent de pressurisation fluide, et **en ce qu'**à l'aide d'un porte-outil (10) en forme de tige traversant le tuyau d'origine (30) en longueur et d'un outil (3) correspondant, le tuyau d'origine (30) est soumis au finissage sur le pourtour intérieur (32) pour devenir le tuyau (40) fini.

2. Procédé selon la revendication 1, **caractérisé en ce que** l'outil (3) et le tuyau de support (20) sont tournés en opposition autour de l'axe longitudinal (A) commun lors du finissage du pourtour intérieur (32) du tuyau d'origine (30).

3. Procédé selon la revendication 2, **caractérisé en ce que** l'outil (3) est monté de manière fixe sur le porte-outil (10) en forme de tige, et **en ce que** le porte-outil (10) est tourné par rapport au tuyau de support (20).

4. Dispositif pour la mise en oeuvre du procédé selon l'une quelconque des revendications 1 à 3, **caractérisé en ce qu'**il englobe un tuyau de support (20) résistant à la forme et pourvu de brides d'extrémité (5, 6), lequel est traversé par un porte-outil semblable à une tige qui pénètre sur toute la longueur avec les brides d'extrémité (5, 6) colmatées et sur lequel est placé un outil (2) pour le finissage du pourtour intérieur (32) du tuyau d'origine (30), **en ce que** dans le tuyau de support (20) et axialement à l'intérieur des brides d'extrémité (5, 6), respectivement une garniture périphérique (15, 16) est placée, et **en ce qu'**une conduite d'alimentation (11) est prévue avec laquelle il est possible d'acheminer un agent de pressurisation fluide à l'intérieur du tuyau de support (20).

5. Dispositif selon la revendication 4, **caractérisé en ce que** des moyens sont prévus pour la rotation réciproque de l'outil (3) et du tuyau de support (20) et/ou pour le déplacement réciproque de ceux-ci dans le sens de l'axe.

6. Dispositif selon la revendication 5, **caractérisé en ce que** l'outil (3) est monté de manière fixe sur le porte-outil (10) en forme de tige, et **en ce que** le porte-outil (10) est entraîné par rotation par rapport au tuyau de support (20).

7. Dispositif selon la revendication 6, **caractérisé en ce que** le porte-outil (10) semblable à une tige est développé sous la forme d'une tige porte-foret avec une barre à mine (3).

8. Dispositif selon l'une quelconque des revendications 4 à 7, **caractérisé en ce que** la conduite d'alimentation (11) pour l'agent de pressurisation fluide mène depuis l'extrémité en. saillie hors de la bride d'extrémité (5) du porte-outil (10) semblable à une tige à travers son
